Europäisches Patentamt

European Patent Office

Office européen des brevets

(19)

(11) **EP 1 220 524 A2**

(12) **DEMANDE DE BREVET EUROPEEN**

(43) Date de publication:
**03.07.2002 Bulletin 2002/27**

(51) Int Cl.$^7$: **H04M 11/06**

(21) Numéro de dépôt: **01403395.5**

(22) Date de dépôt: **31.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **02.01.2001 FR 0100002**

(71) Demandeur: **ALCATEL**
**75008 Paris (FR)**

(72) Inventeurs:
• **Wallois, Marc**
  **78360 Montesson (FR)**
• **Hochedez, Frédéric**
  **92500 Rueil-Malmaison (FR)**
• **Valade, Eric**
  **72190 Sarge les le Mans (FR)**

(74) Mandataire: **Menager, Sophie**
**COMPAGNIE FINANCIERE ALCATEL, DPI, 30, Avénue Kléber**
**75116 Paris (FR)**

(54) **Procédé de synchronisation de données sur une liaison serie**

(57) L'invention propose un procédé de synchronisation de données d'un ordinateur (2) et d'un appareil portable (1) par une liaison série (3). L'ordinateur (2) émet vers l'appareil (1) une commande AT (30) de changement de protocole pour spécifier un protocole propriétaire à utiliser pour la synchronisation. L'appareil (1) émet une réponse (40) pour passer dans le protocole propriétaire spécifié. Les données de l'ordinateur (2) et de l'appareil (1) sont ensuite synchronisées (50) en utilisant ce protocole propriétaire.

L'invention concerne également un appareil porta-ble (1) présentant un port série (4), un interpréteur AT (5) interprétant les commandes reçues sur le port série (4) jusqu'à une commande de changement de protocole et un interpréteur (5) d'un protocole de synchronisation propriétaire, interprétant les commandes reçues sur la liaison série (3) après une commande de changement de protocole.

L'invention permet la synchronisation de données d'un ordinateur et d'un appareil portable en utilisant une liaison série standard sans utiliser d'interfaces propriétaires.

Fig.1

EP 1 220 524 A2

## Description

L'invention porte sur la synchronisation de données entre un ordinateur et un appareil portable, et plus particulièrement sur la synchronisation de données entre un ordinateur de bureau et un organiseur portable ou un terminal téléphonique par une liaison série.

Il est de plus en plus fréquent que des données soient transférées d'un ordinateur de bureau à un appareil portable, tel qu'un organiseur ou un téléphone portable. Les données peuvent être modifiées, supprimées ou crées sur l'un ou l'autre des appareils. Les données contenues par chacun des organiseurs diffèrent alors suivant les interventions qu'elles ont subies et on procède alors à leur synchronisation. La synchronisation peut par exemple comprendre une étape consistant à remplacer une version ancienne d'un fichier, contenu dans un ordinateur de bureau, par sa version mise à jour, contenue dans un organiseur portable. La synchronisation peut également concerner la mise à jour de données internes d'un fichier, telles que des champs d'un fichier correspondant à une application. La synchronisation peut ainsi porter sur des adresses dans une base de données d'un répertoire téléphonique. La synchronisation peut également comprendre une étape consistant à supprimer ou à ajouter un fichier, supprimé ou créé seulement sur l'ordinateur ou l'organiseur portable.

Il est connu du document US-A-5 666 530 de mettre un ordinateur de bureau en communication avec un ordinateur portable de façon automatique. La synchronisation peut être programmée à un horaire prédéterminé. Une horloge contenue dans une puce de l'ordinateur portable, déclenche la synchronisation lorsque l'horaire déterminé est atteint. L'ordinateur de bureau et l'ordinateur portable comportent chacun un modem et peuvent être mis en communication par l'intermédiaire d'un réseau téléphonique. Le document envisage également la liaison des ordinateurs par un port parallèle, un port série ou par radio. Les versions de mêmes fichiers contenus à la fois sur l'ordinateur portable et l'ordinateur de bureau sont comparées. Une fois que des différences entre des versions de même fichiers ont été identifiées, l'utilisateur est interrogé pour savoir s'il souhaite que la communication s'établisse automatiquement. En cas d'approbation de l'utilisateur, une version identique d'un même fichier est stockée dans l'ordinateur de bureau et dans l'ordinateur portable.

Il est en outre connu du document WO99/22324, de programmer une requête de rendez-vous à partir d'un ordinateur portable. Cet ordinateur portable est mis en communication avec un ordinateur de bureau par l'intermédiaire d'une liaison série câblée, par infra-rouge, par cartes réseau ou par modem sans fil. Cette requête peut servir de base pour l'envoi de convocations par e-mail par exemple. L'ordinateur portable génère un objet représentatif de la requête de rendez-vous et assigne un numéro d'identification pour son identification de façon unique par d'autres appareils, tels que des stations de travail, avec lesquels l'ordinateur est mis en communication.

Cependant, ces documents ne décrivent pas comment synchroniser des données sans ajouter d'interfaces propriétaires sur chaque terminal. Ces documents ne décrivent pas nom plus quels protocoles peuvent être utilisés pour effectuer la synchronisation.

Il est par'ailleurs connu de transmettre des données par l'intermédiaire d'un modem en utilisant un protocole AT. Ce protocole a fait l'objet d'une nomenclature sous les références ITU-T V25ter et ETSI TS GSM V7.07. Cependant, ce protocole est peu adapté à la synchronisation de données.

Il existe donc un besoin pour un procédé et un appareil portable permettant de synchroniser des données sans pour autant ajouter des interfaces spécifiques. L'invention concerne ainsi un procédé de synchronisation des données d'un ordinateur et d'un appareil portable, reliés par une liaison série, comprenant les étapes d'émission par l'ordinateur sur la liaison série d'une commande, selon un protocole AT, de changement de protocole spécifiant un protocole propriétaire à utiliser pour la synchronisation, d'émission par l'appareil portable vers l'ordinateur d'une réponse indiquant le passage dans le protocole propriétaire de synchronisation spécifié, de synchronisation des données de l'appareil portable et de l'ordinateur en utilisant le protocole propriétaire de synchronisation spécifié.

Selon une variante, le procédé de synchronisation comprend en outre après l'étape de synchronisation, une étape d'émission par l'appareil portable vers l'ordinateur d'une commande AT indiquant le passage dans le protocole AT.

Selon une autre variante, le protocole de synchronisation propriétaire est un protocole de transmission en paquets.

Selon encore une variant, la commande de changement de protocole est une commande AT+CPROT.

Le procédé de synchronisation comprend préférentiellement, avant l'étape d'émission par l'ordinateur, les étapes d'émission par l'ordinateur d'une commande AT d'interrogation de l'appareil portable sur les protocoles propriétaires que cet appareil portable accepte, d'émission par l'appareil portable vers l'ordinateur d'une réponse indiquant les protocoles propriétaires acceptés.

Selon une autre variante, l'appareil portable est un terminal de téléphonie portable.

Selon encore une variante, l'appareil portable est un organiseur.

L'invention concerne également un appareil portable présentant un port série, un interpréteur AT interprétant les commandes reçues sur la liaison série jusqu'à une commande de changement de protocole, un interpréteur d'un protocole de synchronisation propriétaire, interprétant les commandes reçues sur le port série après une commande de changement de protocole.

Selon une variante de cet appareil portable, le protocole de synchronisation propriétaire est un protocole de transmission en paquets.

Selon une autre variante, la commande de changement de protocole est une commande AT+CPROT.

Selon un autre mode de réalisation, l'appareil portable est un terminal de téléphonie portable.

Selon encore un autre mode de réalisation, l'appareil portable est un organiseur.

D'autres caractéristiques et avantages de l'invention apparaîtront à la lecture de la description qui suit de modes de réalisation de l'invention donnée à titre d'exemple et en référence aux dessins qui montrent :

- figure 1, est une représentation schématique d'un ordinateur et d'un appareil portable reliés par un câble série ;
- figure 2, un ordinogramme représentant les étapes d'un procédé de transmission selon un mode de réalisation de l'invention;
- figure 3, un schéma représentant des éléments d'un appareil portable selon l'invention.

L'invention propose un procédé de synchronisation de données d'un ordinateur et d'un appareil portable sur une liaison série standard. On émet pour cela sur la liaison série des commandes selon un protocole de transmission standard, pour spécifier un protocole de transmission propriétaire de synchronisation.

On va par la suite décrire des exemples de modes de réalisation de l'invention.

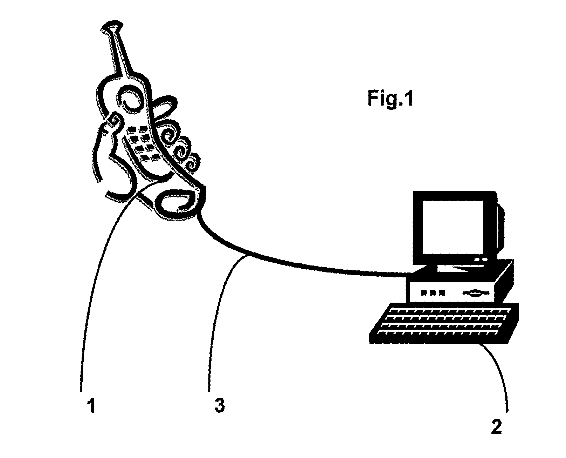

La figure 1 présente un terminal de téléphonie portable 1 relié à un ordinateur 2 par une liaison série 3. La liaison série 3 est adaptée à la transmission de commandes selon un protocole AT. Le terminal portable et l'ordinateur comprennent chacun des données devant être synchronisées, telles qu'un répertoire de coordonnées téléphoniques ou des fichiers. Ces données peuvent avoir été modifiées sur le terminal portable et non sur l'ordinateur ou réciproquement. On procède à la synchronisation de ces données par l'intermédiaire de la liaison série 3, comme on va le décrire par la suite. La liaison série peut être réalisée par exemple au moyen d'un câble série standard relié aux ports série respectifs de l'ordinateur 2 et du terminal portable 1. En outre, les procédés décrits par la suite utilisent les commandes d'un protocole AT standard au début de la mise en communication du terminal portable et de l'ordinateur. Un interpréteur AT est couramment prévu sur les ordinateurs ou sur les appareils portables munis d'une liaison série.

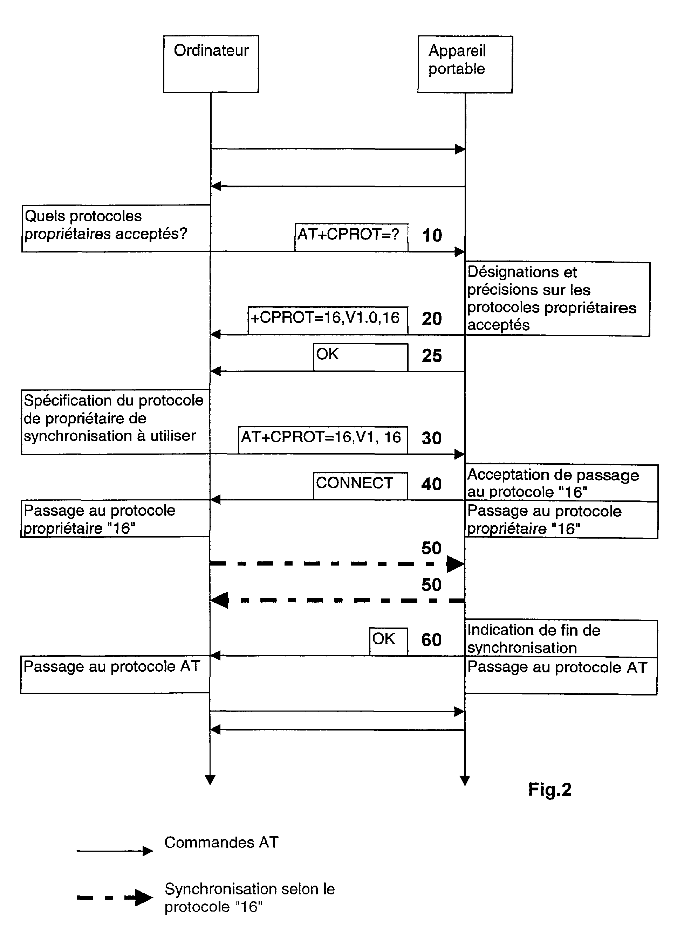

La figure 2 présente un ordinogramme d'un procédé de synchronisation des données d'un ordinateur et d'un appareil portable selon l'invention. L'ordinateur et le terminal portable peuvent communiquer préalablement en utilisant des commandes d'un protocole AT.

Le procédé de synchronisation selon l'invention peut présenter avantageusement et facultativement une étape d'interrogation de l'appareil portable sur les protocoles propriétaire de synchronisation acceptés par cet appareil, par émission d'une commande 10 par l'ordinateur. Le procédé peut ensuite présenter une étape de réponse de l'appareil portable par une commande 20, celui-ci indiquant les protocoles propriétaires acceptés.

A une première étape, l'ordinateur émet une commande AT 10 sur la liaison série 3. Cette commande AT interroge l'appareil portable sur les protocoles propriétaires de synchronisation que cet appareil portable accepte. La commande utilisée peut être une commande du type :

$$AT+CPROT=?$$

L'ordinateur sera ainsi, par exemple, en mesure de choisir un des protocoles acceptés, en fonction par exemple des protocoles qu'il accepte lui-même.

L'appareil portable répond à l'étape suivante par une commande AT 20 sur la liaison série 3, indiquant un ou plusieurs protocoles propriétaires de synchronisation acceptés. En émettant dans la réponse une liste de protocoles propriétaires de synchronisation acceptés, l'ordinateur peut alors déterminer parmi ces protocoles celui qui est le plus approprié pour la synchronisation des données.

La commande de réponse peut prendre la forme suivante par défaut:

+CPROT:X, Y, Z avec X, Y et Z comme paramètre de cette commande.

Dans le cas où une liste de protocoles propriétaires acceptés est émise, elle prend la forme d'une suite de commandes +CPROT: sous la forme suivante :

+CPROT: X, Y, Z
+CPROT: X', Y', Z'
+CPROT: X", Y", Z"

L'appareil portable peut émettre une commande 25 OK à la fin de la liste des protocoles propriétaires acceptés pour indiquer la fin des réponses.

Le paramètre X identifie un protocole propriétaire accepté par l'appareil portable. Il peut par exemple identifier un protocole de transmission en paquet.

Le paramètre Y identifie ici la version du protocole propriétaire de synchronisation accepté. Ce paramètre est facultatif et peut ne pas être renvoyé à l'ordinateur.

Le paramètre Z indiquant un protocole d'application accepté par l'appareil portable. Ce terme est également facultatif.

Dans l'exemple de la figure 2, l'appareil portable émet la commande 20 de réponse suivante:

+CPROT:16, "V1.0", 16

Cette commande se lit ainsi: le protocole 16 est accepté. La version acceptée de ce protocole est la version "1.0". Le protocole d'application 16 est accepté.

Le paramètre X de la commande de réponse permet à l'ordinateur de déterminer quel protocole propriétaire de synchronisation peut être utilisé dans l'étape suivante. Le paramètre Y permet à l'ordinateur de décider quelle version du protocole propriétaire de synchronisation peut être utilisée. On peut ainsi avantageusement éviter des conflits entre les versions des protocoles acceptés par l'ordinateur et l'appareil portable. Le paramètre Z peut par exemple servir à indiquer le protocole d'application disponible dans l'appareil portable.

Après réception du message de réponse, l'ordinateur peut choisir un protocole accepté par lui-même et par l'appareil portable. Les étapes 10 et 20 peuvent être supprimées si l'ordinateur et l'appareil portable sont connus l'un de l'autre; ce peut être le cas si la synchronisation a déjà eu lieu auparavant.

A l'étape suivante, l'ordinateur émet une commande AT 30 sur la liaison série spécifiant le protocole propriétaire à utiliser pour la synchronisation. Cette commande peut être fonction du résultat de la commande 20 facultative ou peut découler d'une connaissance de l'appareil portable par l'ordinateur. Cette commande AT 30 peut se présenter sous la forme suivante:

AT+CPROT=X, Y, Z

Les paramètres X, Y et Z ont la même signification que ceux définis pour la commande 20. Le paramètre X permet ainsi de spécifier le protocole propriétaire à utiliser. Le paramètre Y facultatif permet de spécifier la version du protocole propriétaire à utiliser. Le paramètre Z facultatif permet de spécifier le protocole d'application à utiliser.

Dans l'exemple de la figure 2, l'ordinateur émet la commande 30 suivante:

AT+CPROT=16, "V1.0", 16

Cette commande se lit ainsi: le protocole 16 est à utiliser. La version à utiliser de ce protocole est la version "1.0". Le protocole d'application 16 est à utiliser.

L'appareil portable reçoit ainsi une commande AT 30 de changement vers un protocole propriétaire de synchronisation précis.

A l'étape suivante, l'appareil portable émet une acceptation 40 de passage dans le protocole propriétaire de synchronisation spécifié. On peut utiliser pour cela la commande AT suivante: CONNECT.

Cette acceptation sert d'accusé de réception pour l'ordinateur. Le protocole utilisé est dès lors le protocole de synchronisation.

Lorsque les étapes d'émission des commandes 10 et 20 ne sont pas réalisées, l'absence de la réponse 40 peut servir de signal à l'abandon de la communication entre l'ordinateur et l'appareil portable. Lorsque l'appareil portable n'est pas en mesure d'utiliser le protocole précisé par la commande 30, il peut renvoyer une commande ERROR.

On passe alors à l'étape de synchronisation des données. A cette étape, les données sont synchronisées dans le protocole propriétaire. Des trames 50 de données sont alors émises entre l'appareil portable et l'ordinateur. Le protocole propriétaire utilisé peut être un protocole de synchronisation en paquets.

Lorsqu'on souhaite poursuivre la transmission entre l'appareil portable et l'ordinateur à la fin de la synchronisation, il est possible de repasser en protocole AT. L'appareil portable peut ainsi émettre une commande AT 60 vers l'ordinateur, indiquant le passage dans le protocole AT. On peut ainsi utiliser la commande AT suivante pour indiquer le passage en protocole AT: OK.

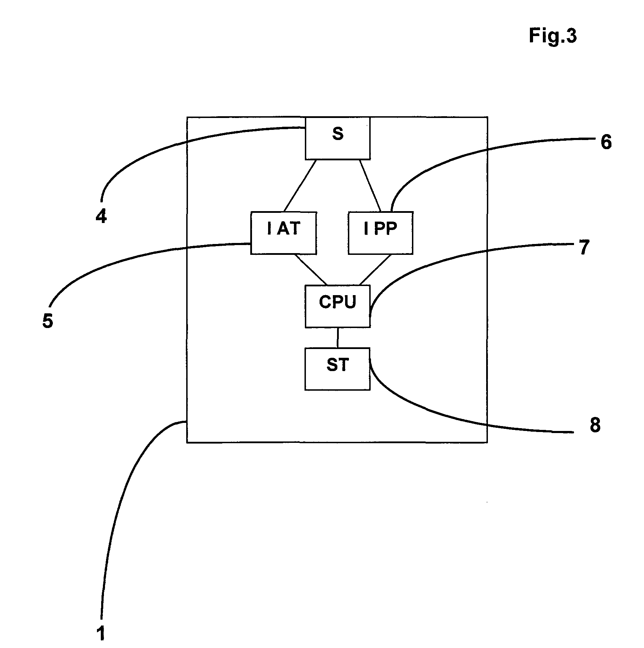

L'invention concerne également un appareil portable. La figure 3 représente un schéma d'éléments d'un appareil portable selon l'invention. Un tel appareil comprend un port série (4), relié à un interpréteur AT (5) et à un interpréteur d'un protocole de synchronisation propriétaire (6). L'appareil représenté présente en outre un processeur (7) effectuant la commutation entre les interpréteurs. Ce processeur est relié à un organe de stockage (8) de données qui peut par exemple être constitué d'une carte mémoire.

L'appareil portable peut rendre alternativement actifs l'interpréteur AT et l'interpréteur de synchronisation propriétaire pour interpréter les commandes. Les interpréteurs permettent d'émettre et de recevoir, sur le port série, des commandes spécifiques à leur protocole lorsqu'ils sont actifs. Le port série permet le raccordement d'un câble série pour établir une liaison série avec un ordinateur ou un autre appareil portable. On peut également envisager d'effectuer la liaison série par d'autres types de support en utilisant par exemple une liaison radio ou une liaison infra-rouge.

On peut illustrer le fonctionnement d'un appareil portable selon l'invention à partir du procédé détaillé à la figure 2. Par défaut, l'interprétateur AT est actif, et l'interpréteur de protocole propriétaire est passif. Ainsi, l'interpréteur AT reste actif lors de la transmission des commandes AT 10, 20, 30 et 40. A réception de la commande 30 de changement de protocole, l'appareil portable émet la commande 40 suivant le protocole AT. Ensuite, les interpréteurs commutent: l'interpréteur AT devient passif et l'interpréteur de synchronisation propriétaire devient actif. Les trames de synchronisation 50 sont alors émises ou reçues par l'interpréteur de protocole propriétaire sur le port série.

A la fin de la synchronisation, les interpréteurs peuvent commuter pour poursuivre les transmissions en protocole AT: l'interpréteur AT devient actif et l'interpréteur de synchronisation propriétaire devient passif. La commande 60 de fin de synchronisation est alors émise sur le port série suivant le protocole AT.

On peut soit utiliser une commande extérieure qui déclenche la commutation entre les interpréteurs, soit utiliser des interpréteurs qui reconnaissent la commande de changement de protocole.

Comme cela est décrit auparavant, un protocole propriétaire de synchronisation de l'appareil peut être un protocole de transmission en paquets.

Les présents modes de réalisation et exemples doivent être considérés comme ayant été présentés à titre illustratif et non restrictif et l'invention n'est pas censée être limitée aux détails fournis ici mais peut être modifiée en restant dans le cadre de la portée des revendications annexées. Ainsi, il est également possible dans le cadre de l'invention d'utiliser d'autres protocoles de synchronisation propriétaires que ceux détaillés dans la description qui précède. Il est également possible d'utiliser le procédé de synchronisation décrit à d'autres types d'appareils qu'un organiseur ou qu'un terminal de téléphonie portable.

**Revendications**

1. Procédé de synchronisation des données d'un ordinateur (2) et d'un appareil portable (1), reliés par une liaison série (3), comprenant les étapes de:

   - émission par l'ordinateur (2) sur la liaison série (3) d'une commande (30), selon un protocole AT, de changement de protocole spécifiant un protocole propriétaire à utiliser pour la synchronisation;
   - émission par l'appareil portable (1) vers l'ordinateur (2) d'une réponse (40) indiquant le passage dans le protocole propriétaire de synchronisation spécifié;
   - synchronisation des données de l'appareil portable (1) et de l'ordinateur (2) en utilisant le protocole propriétaire de synchronisation spécifié.

2. Le procédé de synchronisation de la revendication 1, **caractérisé en ce qu'**il comprend en outre après l'étape de synchronisation, une étape de:

   - émission par l'appareil portable vers l'ordinateur d'une commande AT (60) indiquant le passage dans le protocole AT.

3. Le procédé de synchronisation de la revendication 1 ou 2, **caractérisé en ce que** le protocole de synchronisation propriétaire est un protocole de transmission en paquets.

4. Le procédé de synchronisation de l'une des revendications 1 à 3, **caractérisé en ce que** la commande (30) de changement de protocole est une commande AT+CPROT.

5. Le procédé de synchronisation de l'une des revendications précédentes, **caractérisé en ce qu'**il comprend, avant l'étape d'émission par l'ordinateur, les étapes de:

   - émission par l'ordinateur d'une commande AT (10) d'interrogation de l'appareil portable sur les protocoles propriétaires que cet appareil portable accepte;
   - émission par l'appareil portable vers l'ordinateur d'une réponse (20) indiquant les protocoles propriétaires acceptés.

6. Procédé de synchronisation selon l'une des revendications précédentes, **caractérisé en ce que** l'appareil portable (1) est un terminal de téléphonie portable.

7. Procédé de synchronisation selon l'une des revendications 1 à 6, **caractérisé en ce que** l'appareil portable (1) est un organiseur.

8. Appareil portable (1) présentant:

   - un port série (4);
   - un interpréteur AT (5) interprétant les commandes reçues sur la liaison série jusqu'à une commande de changement de protocole;
   - un interpréteur (6) d'un protocole de synchronisation propriétaire, interprétant les commandes reçues sur le port série (4) après une commande de changement de protocole.

9. Appareil portable selon la revendication 8, **caractérisé en ce que** le protocole de synchronisation propriétaire est un protocole de transmission en paquets.

10. Appareil portable selon la revendication 8 ou 9, **caractérisé en ce que** la commande de changement de protocole est une commande AT+CPROT.

11. Appareil portable selon l'une des revendications 8 à 10, **caractérisé en ce que** cet appareil est un terminal de téléphonie portable.

12. Appareil portable selon l'une des revendications 8 à 10, **caractérisé en ce que** cet appareil est un organiseur.

Fig.1

**1**

**3**

**2**

Fig.2

Ordinateur

Appareil portable

Quels protocoles propriétaires acceptés? | AT+CPROT=? | 10

Désignations et précisions sur les protocoles propriétaires acceptés

+CPROT=16,V1.0,16 | 20

OK | 25

Spécification du protocole de propriétaire de synchronisation à utiliser | AT+CPROT=16,V1, 16 | 30

CONNECT | 40 | Acceptation de passage au protocole "16"

Passage au protocole propriétaire "16" | Passage au protocole propriétaire "16"

50

50

OK | 60 | Indication de fin de synchronisation

Passage au protocole AT | Passage au protocole AT

⟶ Commandes AT

▪ ▪ ▪▶ Synchronisation selon le protocole "16"

**Fig.3**